# EUROPEAN PATENT SPECIFICATION

(11) **EP 2 899 149 B1**
(45) Date of publication and mention of the grant of the patent: **02.11.2016**
(21) Application number: 14152723.4
(22) Date of filing: 27.01.2014
(51) Int. Cl.: B65G 59/02, B65G 61/00, B25J 15/12, B65H 3/32

(54) **A depalletizing device for unloading charges from a palette and a method for unloading charges from a palette**
Depalettierende Vorrichtung zum Entladen von Ladungen von einer Palette und Verfahren zum Entladen von Ladungen von einer Palette
Dispositif de dépalettisation pour décharger des charges d'une palette et procédé pour décharger des charges d'une palette

(43) Date of publication of application: 29.07.2015
(73) Proprietor: Mayr-Melnhof Karton AG, 1041 Wien (AT)
(72) Inventor: Evans, Philip Anthony, Woolston, Warrington WA1 4 EN (GB)
(74) Representative: Hofstetter, Schurack & Partner

(56) References cited:
- GB-A- 2 205 300
- US-A- 5 017 085
- US-A1- 2002 154 986
- US-A1- 2013 017 053

## Description

The invention relates to a depalletizing device for unloading charges from a palette, comprising a gripper by means of which a single charge is clampable and comprising a positioning device by means of which the gripper is pivotable and positionable relative to the palette. Furthermore, the invention relates to a method for unloading charges from a palette by means of a depalletizing device, which comprises a gripper and a positioning device for pivoting and positioning the gripper relative to the palette wherein the gripper is used to remove a single charge from the palette.

US 2013/0017053 A1 and US 2002/0154986 A1 disclose a tool and a method for depalletizing piles of objects separated by sheets as described in the preambles of claims 1 and 13. GB 2 205 300 A discloses device for lifting at least one material stack from a support, wherein a gripper is guided freely movably in all directions by an industrial robot and the gripper comprises at least one clamping element displaceable in a vertical direction and adapted to be placed on the stack and at least one elastically deformable finger insertable between the stack and the intermediate or bottom support. EP 1 855 970 B1 discloses a depalletizing device comprising a carriage as well as a friction roller attached to the carriage. The friction roller is rotatable around a horizontal rotation axis and is coupled to a rotational drive in order to rotate. The carriage is moveable to and fro in a direction at right angles to the rotation axis of the friction roller in order to push the friction roller against the side of an object on a palette in such a manner that the friction roller exerts an upward friction force on the object. As a result of this the object is raised on that side. In order for the friction roller to pass underneath said object after the latter has been raised, the depalletizing device comprises drive means with variable driving power in order to drive the carriage. DE 601 01 478 T2 discloses a depalletizing device with a gripper. The gripper comprises a rigid plate, which is connected to a multi-joint leaver mechanism. Said leaver mechanism comprises a plurality of pivotably interconnected rods, which form a rectangle. The plate can be pivoted and tilted depending on the kinematics of the leaver mechanism. During the movement of the plate the angles between the rods of the leaver mechanism are changed.

Both the control as well as the construction of these depalletizing devices are particularly complex and expensive.

It is the object of the present invention to provide a particularly simple and inexpensive depalletizing device of the initially mentioned kind.

This object is solved by a depalletizing device having the features of claim 1 and by a method for unloading charges from a palette having the features of claim 13. Advantageous configurations with convenient developments of the invention are specified in the dependent claims.

In order to provide a depalletizing device of the initially mentioned kind, which is particularly simple and inexpensive, it is provided according to the invention that the gripper comprises an at least partially flexible plate by means of which the single charge is removable from the palette wherein the flexible plate is elastically deformable upon application of a pressure force which is exertable between the flexible plate and the palette and/or an interleave sheet between the charges by means of the gripper while the flexible plate is adapted to be bended upwards as a result of the pressure force.

In order to remove one or more of the charges from the palette the gripper is used to pick up one charge after the other wherein by means of the positioning device the gripper is moved to a desired location where the single charged is released from the gripper. This location can be e.g. a band-conveyor or a storage location where the charges shall be placed. The positioning device can be designed e.g. as a pivotable rod, which is locked with the gripper via an attachment component (e.g. a connecting flange). When a single charge shall be picked up and unloaded from the palette, the flexible plate is moved towards an edge region of a footprint area of the charge. The flexible plate is then inclined at a predetermined angle relative to the charge which shall be unloaded. In this inclined position the flexible plate is pushed on the interleave sheet and/or the palette and slid between the footprint area of the charge and the interleave sheet whereby the pressure force is exerted between the flexible plate and the palette or between the flexible plate and the interleave sheet since the interleave sheet is supported by the palette. The pressure force can be exerted e.g. by the gravitational force of the gripper. The interleave sheet separates different layers of the charges from each other. By means of this pressure force the flexible plate is bended upwards and at least partially pressed flat against the interleave sheet. In other words, the flexible plate is pressed on the interleave sheet which makes it very easy to move the flexible plate underneath the single charge. Due to the bending of the flexible plate the charge slides under very low friction on the flexible plate and thus the charge is aligned to a contact surface of the gripper. The contact surface is arranged perpendicular to the flexible plate and is used as a dead stop for limiting the sliding of the charge when it is picked up by the flexible plate, or the gripper respectively. In other words the contact surface is especially useful, if the charge is designed e.g. as a stack of paper sheets and the sheets of paper shall be aligned flush with each other due to contacting the contact surface. It is known from the prior art to tilt the gripper in a vertical pivoting direction after the charge has been picked up in order to achieve a gravity-induced sliding of the charge towards the contact surface and an alignment of the charge with the contact surface as a consequence. In contrast to the prior art there is no need for tilting the gripper, or the flexible plate respectively, after the charge has been picked up, in order to achieve flushing with the contact surface of the gripper, since by means of the flexible plate the charge is aligned with the contact surface without vertically pivoting the gripper. Thus this time consuming processing step is dispensable.

In an advantageous configuration of the invention, the gripper comprises a top clamp wherein the single charge is clampable between the top clamp and the flexible plate.

The flexible plate, the contact surface and the top clamp at least substantially form a U-shaped receiving portion. As soon as the flexible plate is slid beneath the charge and the charge is in contact with the contact area, the top clamp is moved towards the flexible plate until the charge is clamped between the top clamp and the flexible plate. By means of the top clamp, which is moveable to and fro in vertical direction relative to the flexible plate, a sliding of the charge can be prevented when the charge is picked up by the gripper and the gripper is pivoted horizontally in order to move the charge away from the palette to a desired location, e.g. a band-conveyor, by means of which the charge is moved further.

It has proven further advantageous, if the flexible plate comprises a first plate component and a second plate component which is fixed to the first plate component, wherein the first plate component is arranged between the second plate component and the top clamp and wherein an upper surface of the first plate component is facing towards the top clamp.

By the superimposition of the two plate components, a specific stiffening of the flexible plate can be achieved which is of a special advantage, if the charges have a higher weight. The upper surface of the first plate component may be polished and thus comprising an especially smooth surface to facilitate sliding of the charge on the flexible plate. As an alternative, the second plate component may also be arranged and clamped in a groove of the first plate component, wherein due to the groove one part of the first plate component is arranged between the second plate component and the top clamp and the other part of the first plate component is not arranged between the top clamp and the second plate component.

It is further advantageous, if the first plate component is at least partially coated with a non-stick coating on its upper surface facing towards the top clamp.

The single charge slides under particularly low friction on the flexible plate, if not only the flexible plate but also the single charge comprise a large flat contact surface. In other words the charge slides particularly easy, if its footprint area is in contact with the first plate component of the flexible plates over a large contact area. By means of this an air film between the charge and the flexible plate may form, which reduces the friction between the charge and the flexible plate to a minimum. However, by coating the first plate component on its upper surface with a non-stick coating, the sliding of the single charge on the flexible plate works with low friction, even if the single charge and the flexible plate or the first plate component respectively have a small contact area or the flexible plate is slid slowly beneath the charge and thus no air film is built up due to the slow movement.

It has proven further advantageous, if the second plate component comprises a greater extension length than the first plate component according to an insertion direction.

The insertion direction corresponds to a direction in which the flexible plate is moved (slid) between the single charge and the interleave sheet and/or the palette. In other words the second plate component touches the single charge before the first plate component comes into contact with the single charge. This is of special advantage, since the second plate component can be designed as an especially thin plate, which can be extensively bended upon the application of a rather low pressure force. Due to this bending the surface of the second plate component can be aligned to the interleave sheet or the footprint area of the charge over an particularly large area of the second plate component and thus an undesired shifting of the charge on the interleave sheet while it is picked up by the gripper can be avoided effectively.

Furthermore, it is particularly advantageous if the first plate component comprises a slope which is arranged at a free end of the first plate component and which extends from a surface facing the second plate component to its lower surface averted from the second plate component.

By means of the slope the first plate component comprises a sharp-edged free end, by means of which the flexible plate can be slid beneath the single charge and the interleave sheet in an especially simplified manner as soon as the second plate component has already been slid underneath the charge. Hence the single charge is hardly shifted on the interleave sheet before it is picket up by means of the flexible plate. In addition, the tendency of damaging the edges of the single charge in an area around its footprint area is particularly low since the first plate component and thus the flexible plate can be easily slid into the small gap between the footprint area of the single charge and the interleave sheet. The lower surface of the flexible plate is in contact with the interleave sheet when the flexible plate has been slid underneath the charge.

It has proven further advantageous if the gripper comprises a suction device by means of which the interleave sheet between the charges is removable from the palette.

The interleave sheet between the charges has to be removed as soon as a complete layer of the single charge is unloaded from the palette in order to unload such charges that are covered by the interleave sheet. Since the gripper comprises the suction device no additional means for removing the interleave sheet are required. The suction device can be e.g. arranged underneath the flexible plate and thus there is no need to change the instrument (the gripper) to remove the interleave sheet. Changing the instrument, e.g. using a separate instrument to remove the interleave sheet would be particularly time costly.

It is further advantageous if the suction device comprises at least one vacuum cup by means of which the interleave sheet is removable from the palette.

By means of at least one vacuum cup a low pressure which is used to hold the interleave sheet at the vacuum cup can be locally restricted in a very efficient manner. If the suction device comprises more than one vacuum cup the suction of the interleave sheet becomes more resistant against a damage or a hole in the interleave sheet. In other words by means of the usage of more than one vacuum cup the interleave sheet is removable from the palette even if the interleave sheet is perforated.

It is particularly advantageous if the gripper comprises a sensor device by means of which the flexible plate is adjustable relative to the palette.

The sensor device can be designed e.g. as at least one laser sensor which measures the relative position of the gripper or the flexible plate by means of e.g. a sensor light. By means of the sensor data provided by the sensor device the flexible plate can be arranged in an ideal position in which the single charge can be removed particularly easy from the palette or the interleave sheet respectively. By means of the sensor device the flexible plate, or the gripper respectively, is adjustable both relative to the palette and relative to the interleave sheet.

Furthermore, it is advantageous if the positioning device is designed as a multi-joint robot.

Mounting the gripper on a multi-joint robot allows a particularly large number of degrees of freedom for the movement of the gripper.

It has proven further advantageous if at least in one direction of extension the flexible plate is shorter than the single charge.

In order to avoid further reduce the chance of a shift of the single charge relative to the interleave sheet, or relative to the palette respectively, while the flexible plate is slid between the single charge and the interleave sheet, it is useful to provide a locally restricted contact area between the single charge and the interleave sheet, in order to make use of the friction between the single charge and the interleave sheet as a counter force, while the flexible plate is slid underneath the charge. The friction between the single charge and the interleave sheet is higher than the friction between the single charge and the flexible plate. In other words the increased friction between the single charge and the interleave sheet is used to move the single charge on the flexible plate. It is clear that the movement of the single charge on the flexible plate can only be supported by the friction between the single charge and the interleave sheet as long as the single charge and the interleave sheet are in contact at least in a small portion. In order to achieve this the length of the flexible plate should be shorter than the charge and thus the charge is in contact with the interleave sheet over a small portion even if the charge is already aligned with the contact surface of the gripper and thus ready to be unloaded. The length of this small portion is given by the difference between the length of the single charge and the length of the flexible plate (from the farthest edge of the flexible plate to the contact surface) in the insertion direction.

In an advantageous configuration of the invention the charges are designed as stacks of carton blanks.

Stacks of carton blanks are particularly well suited to be unloaded by means of the flexible plate attached to the gripper, since stacks of carton blanks comprise a particularly low weight (e.g. compared to metal sheets) and thus there is a small risk to overburden the flexible plate. In addition the single sheets can be prevented from shifting relative to each other very effective.

The method according to the invention serves for unloading charges from a palette by means of a depalletizing device, which comprises a gripper and a positioning device for pivoting and positioning the gripper relative to the palette wherein the gripper is used to remove a single charge from the palette. The gripper, which comprises a flexible plate, is elastically deforming the flexible plate due to an application of a pressure force which the gripper is exerting between the flexible plate and the palette and/or an interleave sheet while the flexible plate is attached to the single charge by means of the gripper and is adapted to be bended upwards as a result of the pressure force.

By the employment of this method the single charge is hardly shifted relative to its original position while the flexible plate is slid under the single charge in order to unload it from the palette.

An advantageous further step of the invention is tilting the single charge relative to the palette by means of the flexible plate before it is removed from the palette.

Tilting the single charge leads to its shifting of weight and thus simplifying the sliding of the flexible plate under the single charge. Hence the tilting leads to an increased friction force between the remaining footprint area between the charge and the interleave sheet. This increased friction is used to simplify the relative slide between the flexible plate and the single charge.

A further advantageous step of the invention is pivoting the gripper about at least two directions of rotation relative to the palette while the flexible plate is attached to the single charge.

If the gripper is pivoted in both a horizontal and vertical direction relative to the palette the flexible plate can start to slide under the single charge in an area with low contact surface, e.g. in a corner of the single charge which makes it easier to move the flexible plate under the charge. In order to avoid shifting of the charge relative to the interleave sheet, the gripper is pivoted around the single charge while the flexible plate is moved under the single charge.

The advantages and preferred embodiments described for the depalletizing device according to the invention also apply to the method according to the invention and vice versa.

The features and feature combinations mentioned above in the description as well as the features and feature combinations mentioned below in the description of figures and/or shown in the figures alone are useable not only in the respectively specified combination but also in any other combinations without departing from the scope of the invention as disclosed by the appended claims.

Further advantages, features and details of the invention are apparent from the claims, the following description of preferred embodiments as well as based on the drawings:
The drawings show in:

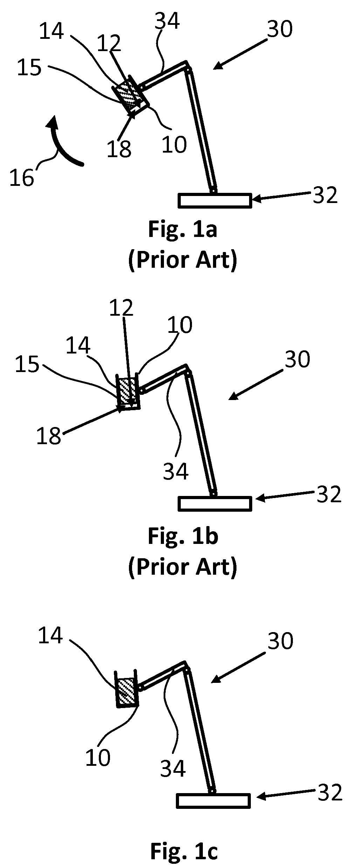

   - Fig. 1 a: a schematic view of a gripper, which is known from the prior art, and which is part of a depalletizing device as well as a positioning device which is designed as a multi-joint robot on which a gripper is pivotably connected;
   - Fig. 1 b: a schematic view of the depalletizing device wherein the gripper, which is known from the prior art, has been pivoted according to a pivoting direction in order to close a gap between a loaded charge and a contact surface of the gripper;
   - Fig. 1 c: a schematic view of the depalletizing device wherein a clamping force, which is exerted by means of the gripper, which is known from the prior art, on the charge is reduced in order to use the gravitational force to close the gap between the charge and the contact surface of the gripper and to flush the charge with the contact surface;
   - Fig. 2: an isometric view of a gripper wherein the gripper comprises a flexible plate according to the invention;
   - Fig. 3a: a top view of a slide plate which corresponds to a first plate component of the flexible plate;
   - Fig. 3b: a side view of the first plate component (slide plate) according to a viewing direction Z which is marked with an arrow in Fig. 3a:
   - Fig. 3c: a detailed view of a portion of the first plate component (slide plate) according to a portion which is marked with a dashed circle D in Fig. 3b;
   - Fig. 3d: a side view of the first plate component (slide plate) according to a viewing direction X which is marked with an arrow in Fig. 3a;
   - Fig. 3e: a detailed view of a free end of the first plate component according to a portion which is marked with a dashed circle E in Fig. 3b;
   - Fig. 3f: a top view of a second plate component which is designed as a flexible blade;
   - Fig. 3g: an isometric view of the flexible plate which corresponds to a slide assembly which comprises the first plate component (slide plate) and the second plate component (flexible blade);
   - Fig. 4a: an isometric view of several charges, which are designed as stacks of carton blanks, and which are arranged on a palette wherein the layers are separated by interleave sheets, wherein a sensor device of the gripper is used to align the flexible plate of the gripper in one direction;
   - Fig. 4b: an isometric view of the charges wherein the flexible plate is slid between the interleave sheet at the edge region of one single charge and wherein the second plate component (flexible plate) is bended upwards due to the exertion of a pressure force by means of the positioning device on which the gripper is mounted; and in
   - Fig. 4c: an isometric view of the charges wherein the single charge is tilted relative to the palette by means of the flexible plate before it is removed from the palette.

Fig. 1 a to Fig. 1 c each show a depalletizing device 30 with a gripper 10 which is known from the prior art, and a positioning device 32 which can be designed e.g. as a crane. The gripper 10 is pivotably connected with the positioning device 32 by means of a robot arm 34 of the positioning device 32. The gripper 10 carries a single charge 14 which corresponds to a stack of carton blanks at present. Fig. 1 a shows the depalletizing device 30 with the charge 14 in a position just after the charge 14 has been removed from a palette 20 (not shown in Fig. 1a to Fig. 1c). The charge 14 comprises an edge region 15 and the gripper 10 comprises a contact surface 12. The edge region 15 is facing the contact surface 12. The edge region 15 and the contact surface 12 are spaced apart resulting in a gap 18 between the contact surface 12 and the edge region 15 of the charge 14. With this gap 18 there is a risk that single sheets of carton blanks of the stack (charge 14) slip relative to each other and thus the single sheets are not flush with each other anymore. Since an alignment of the single sheets of the charge 14 is desirable for further processing steps (e.g. for placing the charge 14 on a band-conveyor), it is necessary to pivot the gripper 10, which is known from the prior art, corresponding to a pivoting direction 16.

Fig. 1 bshows the gripper 10 after its pivoting according to the pivoting direction 16. In this position a clamping force which is exerted upon the charge 14 by means of the gripper 10 is released and thus the gravitational force is used to close the gap 18 between the contact surface 12 and the edge region 15 of the charge 14. In other words the charge 14 slides downwards until the edge region 15 touches the contact surface 12 of the gripper 10. Fig. 1 c shows that the charge 14 or the single sheets of carton blanks respectively are aligned by means of the contact surface 12 and thus the clamping force which is exerted by means of the gripper 10 upon the charge 14 is increased. After its alignment the charge 14 is ready for further processing steps.

The working step of pivoting the charge 14 in order to align the single sheets of carton blanks is both time and energy consuming since the clamping force is reduced at first and increased afterwards (after the alignment of the charge 14 by means of the contact surface 12 is completed).

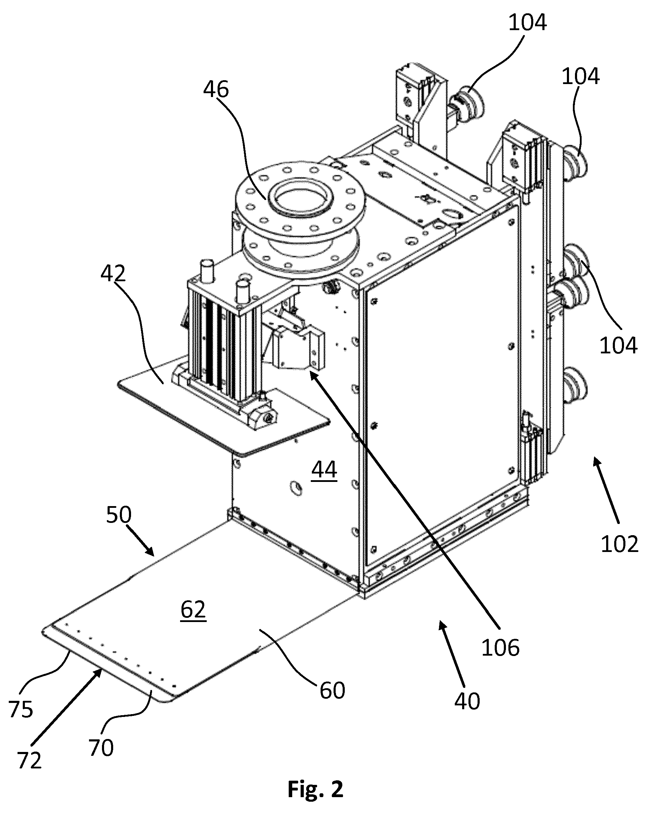

Fig. 2 shows an isometric view of a gripper 40 with a flexible plate 50 wherein the flexible plate 50 corresponds to a slide plate assembly. By means of the gripper 40 the time and energy consuming working step as described above can be dispensed. In other words by means of the gripper 40, and the flexible plate 50 respectively, the charge 14 can be applied to and aligned by a contact surface 44 of the gripper 40 without the necessity of pivoting the gripper 40 followed by a decrease and a subsequent increase of the clamping force.

The gripper 40 utilises the contact surface 44, which is designed as an I-shape support wall, to push against the charge 14 when picking it up. This is a big advantage in ensuring the charge 14 is picked up square and negating the need to pivot the charge 14. Also when picking up smaller size charges 14, e.g. smaller stacks of cartons, this is of great advantage as the displacement of the charge 14 on pick up is higher due to less weight.

The flexible plate 50 (the slide plate assembly) comprises a slide plate 60, which corresponds to a first plate component, with an upper surface 62 which is coated with a non-stick coating for increased sliding of the single charge 14. In other words the first plate component (the slide plate 60) is at least partially coated with the non-stick coating on its upper surface 62. The upper surface 62 is facing towards a top clamp 42 of the gripper 40. The top clamp 42 is moveable upwards and downwards and thus the top clamp 42 is used for clamping the single charge 14 between the top clamp 42 and the flexible plate 50. In other words by means of the top clamp 42 the clamping force can be exerted upon the charge 14 and the top clamp 42 is moved towards the flexible plate 50 in order to hold the single charge 14. In other words the gripper 40 comprises the top clamp 42 wherein the single charge 14 is clampable between the top clamp 42 and the flexible plate 50.

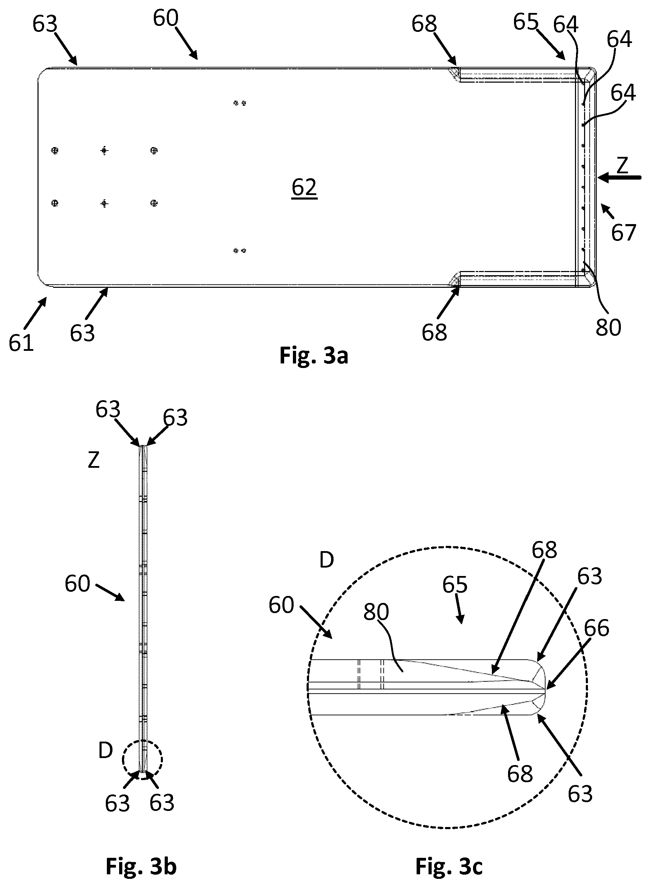

In addition to the first plate component (the slide plate 60) the flexible plate 50 also comprises a second plate component which corresponds to a flexible blade 70. The flexible blade 70 (the second plate component) is fixed to the slide plate 60. The slide plate 60 is at least partially arranged between the blade 70 and the top clamp 42, since in this embodiment the blade 70 is arranged in a groove 66 of the slide plate 60. The groove 66 is shown in Fig. 3c but not in Fig. 2. Since the flexible blade 70 is arranged in the groove 66 only the portion of the slide plate 60 with the upper surface 62 is arranged between the flexible blade 70 and the top clamp 42. The portion of the slide plate 60 which is opposite to the upper surface 62 is not arranged between the blade 70 and the top clamp 42 at present. It is clear, that in a further embodiment the blade 70 could be mounted at the slide plate 60 on the opposing side of the upper surface 62 wherein as a result the whole slide plate 60 would be arranged between the blade 70 and the top clamp 42.

The flexible blade 70 comprises a free end 72 with a leading edge 75. The leading edge 75 corresponds to the edge of the flexible plate 50 which is farthest from the contact surface 44. When the gripper 40 starts to pick up the single charge 14 and the flexible plate 50 begins to slide underneath the charge 14 the leading edge 75 is the first part of the flexible plate 50 that touches the charge 14.

The gripper 40 also comprises a sensor device 106 by means of which the flexible plate 50 is adjustable relative to the palette 20 (not shown here) or relative to the charge 14 respectively. The sensor device 106 can be designed as e.g. a laser sensor or another contact-free sensor by means of which the gripper 40 or the flexible plate 50 respectively are adjustable. The gripper 40 also comprises an attachment component 46 by means of which the gripper 40 can be pivotably connected with a positioning device, which can be designed e.g. as a pivotable rod or a multi-joint robot. The attachment component 46 can be designed e.g. as a flange as it is shown in Fig. 2. The gripper 40 also comprises a suction device 102 by means of which an interleave sheet 22 (not shown here) between different layers of the charges 14 is removable from the palette 20. The suction device 102 comprises several vacuum cups 104 by means of which the interleave sheet 22 is removable from the palette 20.

Fig. 3a shows a top view of the slide plate 60 which is demounted from the gripper 40 at present. The slide plate 60 comprises a connected end 61 with boreholes or threads by means of which the slide plate 60 is connected with the gripper 40. In other words the connected end 61 is attached to the bottom side of the gripper 40. The charge 14 (not shown in Fig. 3a) touches the upper surface 62 of the slide plate 60 when the charge 14 is picked up by the gripper 40. The slide plate 60 is at least partially coated with a non-stick coating on its upper surface 62 facing towards the top clamp 42. In order to both avoid a damage of the charge 14 and to simplify the sliding of the flexible plate 50 beneath the charge 14, the slide plate 60 comprises tapered edges 68. On a free end 67 of the slide plate 60, which is arranged on the opposite end of the connected end 61 the slide plate 60 comprises a connecting area 65 with a plate clamp 80 which is used to mount the flexible blade 70 to the slide plate 60. The plate clamp 80 comprises several threads 64 in which e.g. counter sunk screws can be screwed in in order to connect the flexible blade 70 with the slide plate 60.

Fig. 3b shows a side view of the slide plate 60 according to a viewing direction Z which is marked with an arrow in Fig. 3a. In order to avoid injuries of the operating personnel, e.g. during maintenance of the gripper 40, the slide plate 60 also comprises edge roundings 63 which extend over the whole slide plate 60.

Fig. 3c shows a detailed view on a portion of the slide plate 60 according to an area D which is marked with a dashed circle in Fig. 3b. In contrast to the edge roundings 63 which extend over the whole slide plate 60, the tapered edges 68 are limited to the region of the free end 67 and the plate clamp 80. The plate clamp 80 comprises the groove 66 in which the blade 70 can be inserted. After the insertion of the blade 70 the blade 70 is fixed to the slide plate 60 by means of e.g. counter sunk screws which are screwed into the threads 64.

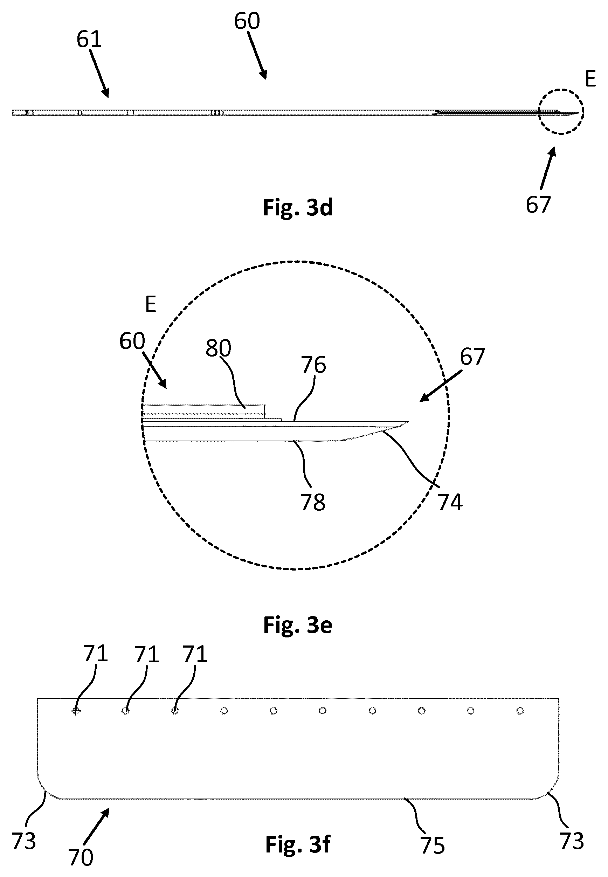

Fig. 3d shows another side view on the slide plate 60 according to a viewing direction X which is marked with an arrow in Fig. 3a. Fig. 3e shows a detailed view of the free end 67 according to a portion E which is marked with a dashed circle in Fig. 3d. The slide plate 60 comprises a slope 74 which is arranged at the free end 67 and which extends from a surface 76 facing the blade 70 to a lower surface 78 averted from the blade 70. When the blade 70 is fixed to the slide plate 60, the blade 70 is applied to the surface 76 of the slide plate 60. By means of the slope 74 the sliding of the flexible plate 50 between the charge 14 and the interleave sheet 22 is significantly simplified since the slope 74 slides on the interleave sheet 22. It is clear, that the sliding is additionally simplified, if the slope 74 and in addition or alternatively the lower surface 78 are polished or coated with a non-stick coating.

Fig. 3f shows a top view on the blade 70 wherein the blade 70 comprises several bore holes 71 which align with the threads 64 of the slide plate 60. In order to simplify the sliding of the blade 70 and in order to avoid a damage to the charge 14 the leading edge 75 is limited by two opposing edge roundings 73. It is clear, that in addition to the slide plate 60, also the flexible blade 70 could be coated with a non-stick coating.

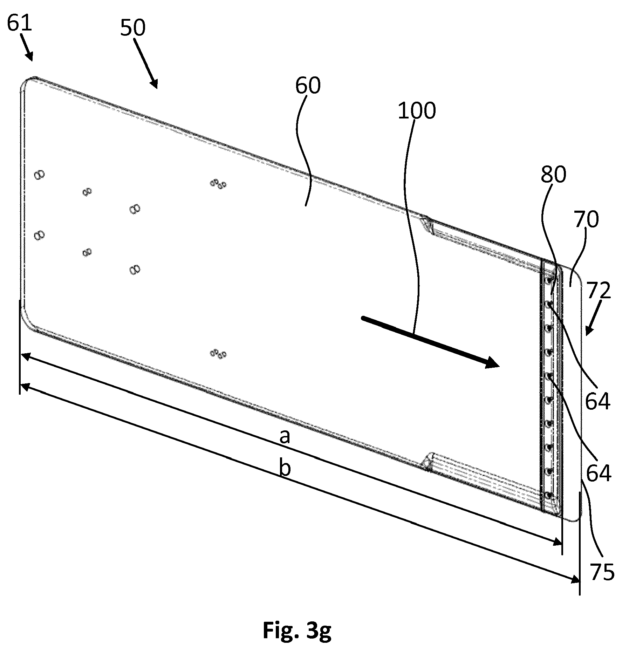

Fig. 3g shows an isometric view of the flexible plate 50 wherein the blade 70 is mounted to the slide plate 60 by means of the plate clamp 80. The blade 70 comprises a greater extension length b than the slide plate 60 according to an insertion direction 100 which is marked with an arrow. The insertion direction 100 corresponds to a direction in which the flexible plate 50 is moved between the charge 14. The extension length b is larger than the extension length a of the slide plate 60. The extension length a, b is measured from the connected end 61 to the end of the slope 74 or to the leading edge respectively. In other words the blade 70 touches the single charge 14 before the slide plate 60 touches the single charge 14.

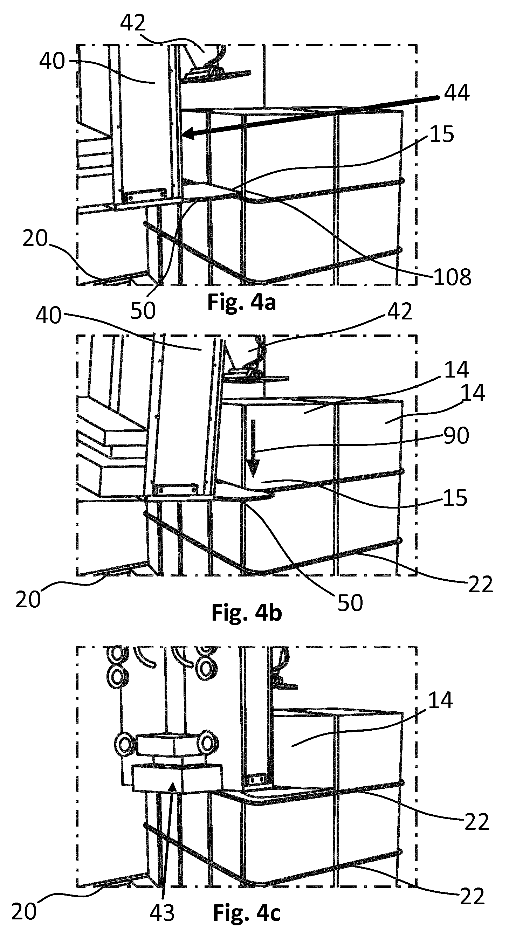

Fig. 4a to Fig. 4c show some of the steps which are executed for unloading the charge 14 from the palette 20. The charges 14 correspond to stacks of carton blanks at present.

Fig. 4a shows how the gripper 40 is adjusted relative to the palette 20 and thus relative to the single charge 14, which shall be picked up by the gripper 40, by means of a sensor light 108 which is emitted by the sensor device 106 (not shown in Fig. 4a).

The position of the first single charge 14, which is unloaded from the palette 20 is determined by means of the sensor device 106. In order to speed up the unloading process of the charges, in the further process of unloading, the positioning device unloads the remaining charges on the interleave sheet 22 based on the assumption that the vertical position of the remaining charges 14 of the current layer is the same. If one or more charges 14 of the lower layer or layers comprise a different height (vertical position) e.g. due to the fact that some of the charges 14 are more or less compressed than others, also the charges 14 of the layer which is currently unloaded have a different height, since they are supported by the lower charges 14. However, by means of the flexibility of the blade 70 the lower stacks (which are covered by the corresponding interleave sheet 22) are pushed down, wherein the vertical tolerance (height) is equalised.

It is of special advantage, if the sensor device 106 comprises at least two sensors, wherein one of the sensors is used to define the overall height of the first charge 14 which is next to the gripper 40, or the charge 14 which is the first to be unloaded. By means of this measurement, the height of one edge of the charge 14 is determined. This measurement is repeated after e.g. a 90° rotation of the gripper 40 around the charge 14 and in horizontal direction relative to the charge 14, wherein the height of another, adjacent edge is determined. After that, or during this measurement the distance between the corner (next to the footprint area and next to the gripper 40) and the ground is determined by means of the sensor device 106. By means of the height measurements of the edges and the measurement of the distance to the ground a zero-point of a corner, which is built by the edges can be triangulated. The second sensor then looks for this corner of the charge 14 (the first stack item to be unloaded).

The position (vertical and horizontal) of the first charge 14 of the layer, which has to be unloaded is determined by means of the sensor device 106. The measurement starts e.g. 40 mm away from the shorted edge of the charge 14 (e.g. the palette stack). The gripper 40 (and thus the sensor device 106) then moves back towards the edge of the palette stack until it reads a change in height from the defined zero-point. This value is stored along with the measurement of the tool location in relation to the contact surface 44 (I-shape wall) defined as its zero-point. The gripper 40 is then moved this 40mm away from the longest edge at the top of the palette 20 and repeats this measurement. It triangulates the position of the edges and then calculates the zero-point to start the second measurement for the interleave sheet 22.

Fig. 4b shows how the positioning device moves the gripper 40 towards and the flexible plate 50 underneath the charge 14. In order to avoid a shifting of the charge 14 on the interleave sheet 22, the flexible plate 50 is elastically deformed upon application of a pressure force 90 which is exerted between the flexible plate 50 and the palette 20, or the interleave sheet 22 respectively, by means of the gripper 40 while the flexible plate 50 is attached to the single charge 14. As a result of the pressure force 90, the flexible blade 70 is bended upwards. Since the blade 70 is flexible it is ensured that the very last carton in the stack is picked up. This is dependent on calculations made on the stack to ensure the tolerance or the flex in the blade 70 is set in the correct zone to achieve this. The interleave sheets 22 define the separation of each charge layer. It is clear that the pressure force 90 could be further increased and thus also the slide plate 60 could be bended upwards, if necessary.

Fig. 4c shows that the single charge 14 is tilted relative to the palette 20 by means of the flexible plate 50 before it is removed from the palette 20. The gripper 40 is pivoted about two directions of rotation relative to the palette 20 while the flexible plate 50 is attached to the single charge 14. In other words the gripper 40 is pivoted both in horizontal and in vertical direction while the flexible plate 50 is moved under the charge 14. In contrast to the prior art the edge region 15 is aligned with the contact surface 44 of the gripper 40 without the necessity to use the gravitational force for alignment. In order to further simplify the sliding of the flexible plate 50 underneath the single charge 14, the flexible plate 50 is shorter than the charge 14 and thus at least a portion of the footprint area of the charge 14 is in contact with the interleave sheet 22 even if the edge region 15 of the charge 14 is already in contact with the contact surface 44. As a consequence the friction at the remaining portion of the footprint area supports the sliding of the flexible plate 50 underneath the charge 14. In order to further simplify the sliding of the flexible plate 50 underneath the single charge, the gripper 40 also comprises an air piston 43, which is connected with the flexible plate 50. By means of the air piston 43, the flexible plate 50 can be telescoped. In other words, by means of the air piston 43, the leading edge 75 of the blade can be spaced apart from the contact surface 44 according to the insertion direction 100 while the flexible plate 50 is slid under the charge 14. By means of telescoping the flexible plate 50 at least 75% of the footprint area of the charge 14 can be clamped between the flexible plate 50 and the top clamp 42.

The blade 70, once engaged under the lowermost carton is moved in two ways:
The first move is around the shape of the carton blanks to a centre line of the carton blanks. This move is possible due to the flexibility of the blade 70 and allows to pick up cartons from a complex shape side of the carton, e.g. if this complex shape side has a round edge instead of a straight edge.
The second move is towards a side of the carton where it is glued together. This side has no complex shape and is much easier to pick up.

## Claims

1. A depalletizing device (30) for unloading charges (14) from a palette (20), comprising a gripper (40) by means of which a single charge (14) is clampable and comprising a positioning device by means of which the gripper (40) is pivotable and positionable relative to the palette (20),
the gripper (40) comprises an at least partially flexible plate (50) by means of which the single charge (14) is removable from the palette (20),
**characterized in that**
the flexible plate (50) is elastically deformable upon application of a pressure force (90) which is exertable between the flexible plate (50) and the palette (20) and/or an interleave sheet (22) between the charges (14) by means of the gripper (40) while the flexible plate (50) is adapted to be bent upwards as a result of the pressure force (90).

2. The depalletizing device (30) according to claim 1,
**characterized in that**
the gripper (40) comprises a top clamp (42) wherein the single charge (14) is clampable between the top clamp (42) and the flexible plate (50).

3. The depalletizing device (30) according to claim 1 or 2,
**characterized in that**
the flexible plate (50) comprises a first plate component (60) and a second plate component (70) which is fixed to the first plate component (60), wherein the first plate component (60) is arranged between the second plate component (70) and the top clamp (42) and wherein an upper surface (62) of the first plate component (60) is facing towards the top clamp (42).

4. The depalletizing device (30) according to claim 3,
**characterized in that**
the first plate component (60) is at least partially coated with a non-stick coating on its upper surface (62) facing towards the top clamp (42).

5. The depalletizing device (30) according to claim 3 or 4,
**characterized in that**
the second plate component (70) comprises a greater extension length (b) than the first plate component (60) according to an insertion direction (100).

6. The depalletizing device according (30) to any one of claims 3 to 5,
**characterized in that**
the first plate component (60) comprises a slope (74) which is arranged at a free end (72) of the first plate component (60) and which extends from a surface (76) facing the second plate component (70) to its lower surface (78) averted from the second plate component (70).

7. The depalletizing device (30) according to any one of claims 1 to 6,
**characterized in that**
the gripper (40) comprises a suction device (102) by means of which the interleave sheet (22) between the charges (14) is removable from the palette (20).

8. The depalletizing device (30) according to claim 7,
**characterized in that**
the suction device (102) comprises at least one vacuum cup (104) by means of which the interleave sheet (22) is removable from the palette (20).

9. The depalletizing device (30) according to any one of claims 1 to 8,
**characterized in that**
the gripper (40) comprises a sensor device (106) by means of which the flexible plate (50) is adjustable relative to the palette (20).

10. The depalletizing device (30) according to any one of claims 1 to 9,
**characterized in that**
the positioning device is designed as a multi-joint robot.

11. The depalletizing device (30) according to any one of claims 1 to 10,
**characterized in that**
at least in one direction of extension the flexible plate (50) is shorter than the single charge (14).

12. The depalletizing device (30) according to any one of claims 1 to 11,
**characterized in that**
the charges (14) are designed as stacks of carton blanks.

13. A method for unloading charges (14) from a palette (20) by means of a depalletizing device (30), which comprises a gripper (40) and a positioning device for pivoting and positioning the gripper (40) relative to the palette (20) wherein the gripper (40) is used for removing a single charge (14) from the palette (20),
**characterized by** a step,
in which the gripper (40), which comprises a flexible plate (50), is elastically deforming the flexible plate (50) due to an application of a pressure force (90) which the gripper (40) is exerting between the flexible plate (50) and the palette (20) and/or an interleave sheet (22) while the flexible plate (50) is attached to the single charge (14) by means of the gripper (40) and is adapted to be bent upwards as a result of the pressure force (90).

14. The method according to claim 13
**characterized by** the further step of
tilting the single charge (14) relative to the palette (20) by means of the flexible plate (50) before it is removed from the palette (20).

15. The method according to claim 13 or 14
**characterized by** the further step of
pivoting the gripper (40) about at least two directions of rotation relative to the palette (20) while the flexible plate (50) is attached to the single charge (14).

## Patentansprüche

1. Entpalettierungsvorrichtung (30) zum Abladen von Ladungen (14) von einer Palette (20) mit einem Greifer (40), mittels dessen eine einzelne Ladung (14) einklemmbar ist, und mit einer Positionierungsvorrichtung, mittels derer der Greifer (40) relativ zur Palette (20) schwenkbar und positionierbar ist, wobei der Greifer (40) eine zumindest teilweise flexible Platte (50) umfasst, mittels derer die einzelne Ladung (14) von der Palette (20) abnehmbar ist,
**dadurch gekennzeichnet, dass**
die flexible Platte (50) beim Aufbringen einer Druckkraft (90) elastisch verformbar ist, die zwischen der flexiblen Platte (50) und der Palette (20) und/oder einem Trennbogen (22) zwischen den Ladungen (14) mittels des Greifers (40) ausgeübt werden kann, während die flexible Platte (50) so ausgelegt ist, dass sie infolge der Druckkraft (90) nach oben gebogen wird.

2. Entpalettierungsvorrichtung (30) nach Anspruch 1,
**dadurch gekennzeichnet, dass**
der Greifer (40) eine obere Klemme (42) umfasst, wobei die einzelne Ladung (14) zwischen der oberen Klemme (42) und der flexiblen Platte (50) einklemmbar ist.

3. Entpalettierungsvorrichtung (30) nach Anspruch 1 oder 2,
**dadurch gekennzeichnet, dass**
die flexible Platte (50) eine erste Plattenkomponente (60) und eine zweite Plattenkomponente (70), die an der ersten Plattenkomponente (60) befestigt ist, umfasst, wobei die erste Plattenkomponente (60) zwischen der zweiten Plattenkomponente (70) und der oberen Klemme (42) angeordnet ist und wobei eine obere Oberfläche (62) der ersten Plattenkomponente (60) in Richtung der oberen Klemme (42) gewandt ist.

4. Entpalettierungsvorrichtung (30) nach Anspruch 3,
**dadurch gekennzeichnet, dass**
die erste Plattenkomponente (60) zumindest teilweise mit einer Antihaftbeschichtung an ihrer oberen Oberfläche (62), die in Richtung der oberen Klemme (42) gewandt ist, beschichtet ist.

5. Entpalettierungsvorrichtung (30) nach Anspruch 3 oder 4,
**dadurch gekennzeichnet, dass**
die zweite Plattenkomponente (70) eine größere Ausdehnungslänge (b) als die erste Plattenkomponente (60) gemäß einer Einführungsrichtung (100) umfasst.

6. Entpalettierungsvorrichtung (30) nach einem der Ansprüche 3 bis 5,
**dadurch gekennzeichnet, dass**
die erste Plattenkomponente (60) eine Neigung (74) umfasst, die an einem freien Ende (72) der ersten Plattenkomponente (60) angeordnet ist und die sich von einer Oberfläche (76), die der zweiten Plattenkomponente (70) zugewandt ist, zu ihrer unteren Oberfläche (78), die von der zweiten Plattenkomponente (70) abgewandt ist, erstreckt.

7. Entpalettierungsvorrichtung (30) nach einem der Ansprüche 1 bis 6,
**dadurch gekennzeichnet, dass**
der Greifer (40) eine Saugvorrichtung (102) umfasst, mittels derer der Trennbogen (22) zwischen den Ladungen (14) von der Palette (20) entfernbar ist.

8. Entpalettierungsvorrichtung (30) nach Anspruch 7,
**dadurch gekennzeichnet, dass**
die Saugvorrichtung (102) mindestens einen Saugnapf (104) umfasst, mittels dessen der Trennbogen (22) von der Palette (20) entfernbar ist.

9. Entpalettierungsvorrichtung (30) nach einem der Ansprüche 1 bis 8,
**dadurch gekennzeichnet, dass**
der Greifer (40) eine Sensorvorrichtung (106) umfasst, mittels derer die flexible Platte (50) relativ zur Palette (20) einstellbar ist.

10. Entpalettierungsvorrichtung (30) nach einem der Ansprüche 1 bis 9,
**dadurch gekennzeichnet, dass**
die Positionierungsvorrichtung als Roboter mit mehreren Gelenken ausgelegt ist.

11. Entpalettierungsvorrichtung (30) nach einem der Ansprüche 1 bis 10,
**dadurch gekennzeichnet, dass**
zumindest in einer Ausdehnungsrichtung die flexible Platte (50) kürzer ist als die einzelne Ladung (14).

12. Entpalettierungsvorrichtung (30) nach einem der Ansprüche 1 bis 11,
**dadurch gekennzeichnet, dass**
die Ladungen (14) als Stapel von Kartonzuschnitten ausgelegt sind.

13. Verfahren zum Abladen von Ladungen (14) von einer Palette (20) mittels einer Entpalettierungsvorrichtung (30), die einen Greifer (40) und eine Positionierungsvorrichtung zum Schwenken und Positionieren des Greifers (40) relativ zur Palette (20) umfasst, wobei der Greifer (40) zum Abnehmen einer einzelnen Ladung (14) von der Palette (20) verwendet wird,
**gekennzeichnet durch** einen Schritt,
in dem der Greifer (40), der eine flexible Platte (50) umfasst, die flexible Platte (50) aufgrund eines Aufbringens einer Druckkraft (90) elastisch verformt, die der Greifer (40) zwischen der flexiblen Platte (50) und der Palette (20) und/oder einem Trennbogen (22) ausübt, während die flexible Platte (50) an der einzelnen Ladung (14) mittels des Greifers (40) befestigt wird, und so ausgelegt ist, dass sie infolge der Druckkraft (90) nach oben gebogen wird.

14. Verfahren nach Anspruch 13,
**gekennzeichnet durch** den weiteren Schritt des
Neigens der einzelnen Ladung (14) relativ zur Palette (20) mittels der flexiblen Platte (50), bevor sie von der Palette (20) abgenommen wird.

15. Verfahren nach Anspruch 13 oder 14,
**gekennzeichnet durch** den weiteren Schritt des
Schwenkens des Greifers (40) um mindestens zwei Drehrichtungen relativ zur Palette (20), während die flexible Platte (50) an der einzelnen Ladung (14) befestigt ist.

## Revendications

1. Dispositif de dépallétisation (30), destiné à décharger des charges (14) d'une palette (20), comprenant un préhenseur (40), au moyen duquel une charge unique (14) peut être serrée et comprenant un dispositif de positionnement, au moyen duquel le préhenseur (40) est pivotable et positionnable par rapport à la palette (20),
le préhenseur (40) comprend une plaque au moins partiellement flexible (50), au moyen de laquelle la charge unique (14) peut être enlevée de la palette (20),
**caractérisé en ce que**
la plaque flexible (50) est déformable élastiquement sur application d'une force de pression (90), qui peut être exercée entre la plaque flexible (50) et la palette (20) et / ou une plaque intercalée (22) entre les charges (14), au moyen du préhenseur (40), tandis que la plaque flexible (50) est adaptée pour être pliée vers le haut, en résultat de la force de pression (90).

2. Dispositif de dépallétisation (30) selon la revendication 1,
**caractérisé en ce que**
le préhenseur (40) comprend un serrage supérieur (42), dans lequel la charge unique (14) peut être serrée entre le serrage supérieur (42) et la plaque flexible (50).

3. Dispositif de dépallétisation (30) selon la revendication 1 ou 2,
**caractérisé en ce que**
la plaque flexible (50) comprend un premier composant de plaque (60) et un second composant de plaque (70), qui est fixé au premier composant de plaque (60), dans lequel le premier composant de plaque (60) est agencé entre le second composant de plaque (70) et le serrage supérieur (42) et dans lequel une surface supérieure (62) du premier composant de plaque (60) est dirigée vers le serrage supérieur (42).

4. Dispositif de dépallétisation (30) selon la revendication 3,
**caractérisé en ce que**
le premier composant de plaque (60) est revêtu au moins partiellement avec un revêtement anti-adhésif sur sa surface supérieure (62), dirigée vers le serrage supérieur (42).

5. Dispositif de dépallétisation (30) selon la revendication 3 ou 4,
**caractérisé en ce que**
le second composant de plaque (70) comprend une longueur d'extension (b) plus grande que le premier composant de plaque (60), selon un sens d'insertion (100).

6. Dispositif de dépallétisation (30) selon l'une quelconque des revendication 3 à 5,
**caractérisé en ce que**
le premier composant de plaque (60) comprend une pente (74), qui est agencée à une extrémité libre (72) du premier composant de plaque (60) et qui s'étend depuis une surface (76) faisant face au second composant de plaque (70), vers sa surface inférieure (78), détournée du second composant de plaque (70).

7. Dispositif de dépallétisation (30) selon l'une quelconque des revendications 1 à 6,
**caractérisé en ce que**
le préhenseur (40) comprend un dispositif d'aspiration (102), au moyen duquel la plaque intercalée (22) entre les charges (14) peut être enlevée de la palette (20).

8. Dispositif de dépallétisation (30) selon la revendication 7,
**caractérisé en ce que**
le dispositif d'aspiration (102) comprend au moins une ventouse (104), au moyen de laquelle la plaque intercalée (22) peut être enlevée de la palette (20).

9. Dispositif de dépallétisation (30) selon l'une quelconque des revendication 1 à 8,
**caractérisé en ce que**
le préhenseur (40) comprend un dispositif formant capteur (106), au moyen duquel la plaque flexible (50) peut être réglée par rapport à la palette (20).

10. Dispositif de dépallétisation (30) selon l'une quelconque des revendication 1 à 9,
**caractérisé en ce que**
le dispositif de positionnement est conçu comme un robot à articulations multiples.

11. Dispositif de dépallétisation (30) selon l'une quelconque des revendication 1 à 10,
**caractérisé en ce que**
la plaque flexible (50) est plus courte que la charge unique (14) dans au moins un sens d'extension.

12. Dispositif de dépallétisation (30) selon l'une quelconque des revendication 1 à 11,
**caractérisé en ce que**
les charges (14) sont conçues comme des piles de flans de carton.

13. Procédé de déchargement de charges (14) d'une palette (20) au moyen d'un dispositif de dépallétisation (30), qui comprend un préhenseur (40) et un dispositif de positionnement, destiné à faire pivoter et à positionner le préhenseur (40) par rapport à la palette (20), dans lequel le préhenseur (40) est utilisé pour enlever une charge unique (14) de la palette (20),
**caractérisé par** une étape
au cours de laquelle le préhenseur (40), qui comprend une plaque flexible (50), déforme élastiquement la plaque flexible (50) en raison d'une application d'une force de pression (90) qu'exerce le préhenseur (40) entre la plaque flexible (50) et la palette (20) et / ou une plaque intercalée (22), tandis que la plaque flexible (50) est fixée sur la charge unique (14) au moyen du préhenseur (40) et est adaptée pour être pliée vers le haut, en résultat de la force de pression (90).

14. Procédé selon la revendication 13,
**caractérisé par** l'étape supplémentaire consistant à
incliner la charge unique (14) par rapport à la palette (20) au moyen de la plaque flexible (50) avant de l'enlever de la palette (20).

15. Procédé selon la revendication 13 ou 14,
**caractérisé par** l'étape supplémentaire consistant à
faire pivoter le préhenseur (40), autour d'au moins deux sens de rotation, par rapport à la palette (20), tandis que la plaque flexible (50) est fixée à la charge unique (14).
